Europäisches Patentamt

European Patent Office

Office européen des brevets

(11) Veröffentlichungsnummer: **0 042 372**
**A1**

## (12) EUROPÄISCHE PATENTANMELDUNG

(21) Anmeldenummer: **81890096.1**

(51) Int. Cl.³: **F 27 B 9/10, C 04 B 33/32**

(22) Anmeldetag: **11.06.81**

(30) Priorität: **12.06.80 AT 3121/80**

(43) Veröffentlichungstag der Anmeldung: **23.12.81**
**Patentblatt 81/51**

(84) Benannte Vertragsstaaten: **BE CH DE FR GB IT LI LU NL SE**

(71) Anmelder: **Rieger, Walter, Roithstrasse 14, A-4810 Gmunden (AT)**

(72) Erfinder: **Rieger, Walter, Roithstrasse 14, A-4810 Gmunden (AT)**

(74) Vertreter: **Wolfram, Gustav, Dipl.Ing., Schwindgasse 7 P.O.Box 205, A-1041 Wien (AT)**

(54) Verfahren zum Brennen von dünnwandigen, insbesondere Kernlöcher enthaltenden keramischen Formlingen sowie Anlage zur Durchführung des Verfahrens.

(57) Beim Brennen dieser Formlinge (11), welche auf Herdwagen (2) gelagert durch eine Vorwärmzone, eine Brennzone und eine Kühlzone eines Tunnelofens geführt werden, werden in der Vorwärm- und Brennzone Rauchgase und in der Kühlzone Kühlgase durch Zwischenräume zwischen den Formlingen bzw. durch Kernlöcher (12) der Formlinge (11) geleitet und in einem Gassammelkanal (16) abgeleitet.

Um eine gleichmäßige Beaufschlagung der zu brennenden Formlinge (11), d. h. ein möglichst gleichmäßiges Strömungs- bzw. Geschwindigkeitsprofil der die Kernlöcher (12) durchströmenden Rauchgase oder Kühlgase über die gesamte Belagfläche der Herdwagen (2) zu gewährleisten, werden während des Durchfahrens der Herdwagen (2) durch die Zonen (A, B, C, F) des Tunnelofens (1) die Rauch- bzw. Kühlgase im Kreuzstrom von oben nach unten durch die Zwischenräume bzw. die Kernlöcher (12) der Formlinge (11) durch Saugen zwangsgeführt, wobei die Gase in einer Vielzahl von ersten Entspannungszonen (13) entspannt, sodann unter Querschnittsverminderung der Gasführungen (10) beschleunigt und darauf in einer für eine Vielzahl von Gasführungen gemeinsamen zweiten Entspannungszone (14) nochmals entspannt werden, bevor sie abgeleitet werden.

Fig. 1

Verfahren zum Brennen von dünnwandigen, insbesondere Kernlöcher enthaltenden keramischen Formlingen sowie Anlage zur Durchführung des Verfahrens

Die Erfindung betrifft ein Verfahren zum Brennen von dünnwandigen, insbesondere Kernlöcher enthaltenden keramischen Formlingen, welche auf Herdwagen gelagert durch eine Vorwärmzone, eine Brennzone und eine Kühlzone eines Tunnelofens geführt werden, wobei in der Vorwärm- und Brennzone Rauchgase und in der Kühlzone Kühlgase durch Zwischenräume zwischen den Formlingen bzw. durch die Kernlöcher der Formlinge geleitet und in einem Gassammelkanal abgeleitet werden, sowie eine Anlage zur Durchführung des Verfahrens.

Verfahren dieser Art sind beispielsweise aus der AT-PS 174 012 bekannt. Die Rauchgase aus der Brennzone werden meist im Gegenstrom zu den mit Stapeln von keramischen Formlingen beladenen Herdwagen geführt, wobei die Gasbewegung durch in der Seitenwand des Tunnelofens angeordnete Saugzugventilatoren bewerkstelligt werden kann.

Bei Durchführung solcher Verfahren hat sich die Schwierigkeit ergeben, daß das die Zwischenräume zwischen einzelnen Formlingen, z.B. die Zwischenräume zwischen hochkant gestellten Dachziegeln, bzw. die Kernlöcher durchströmende bzw. durchgesaugte Gas ein ungleichmäßiges Strömungsprofil aufweist, wobei die größten Durchflußmengen im unmittelbaren Ansaugbereich der Ventilatoren, meist in der Mitte des Belages, und die geringsten Durchflußmengen seitlich davon, insbesondere in den Ecken des Belages, vorhanden sind. Dies ist besonders unerwünscht beim Brennen von keramischen Formlingen,

- 2 - 0042372

die wärmeerzeugende, brennbare Bestandteile enthalten; denn bei ungleichmäßigem Geschwindigkeitsprofil entsteht ein ungleichmäßiger bzw. unvollständiger Ausbrand der brennbaren Bestandteile, mit der Folge, daß einerseits schwarze Flecken und andererseits starke Überhitzungsdeformationen an den keramischen Formlingen in Erscheinung treten.

Für eine bessere Ausnutzung des Wärmeinhältes der in der Brennzone entstehenden Rauchgase wurde bereits vorgeschlagen (Ziegelindustrie International, Dezember 1979, Seiten 779 bis 782), einen Tunnelofen mit zwei parallelen Ofenräumen und einer gemeinsamen Trennwand auszubilden und die beiden Öfen in Gegenrichtung zueinander zu betreiben, sodaß die Vorwärmzonen jeweils gegenüber Kühlzonen zu liegen kommen, sodaß ein gegenseitiger Wärmeaustausch stattfindet. Die ungleichmäßige Beaufschlagung der Formlinge bzw. Stapel von Formlingen mit den angeführten Nachteilen wird dabei jedoch nicht ausgeschaltet.

Die Erfindung bezweckt die Vermeidung der geschilderten Nachteile und stellt sich die Aufgabe, ein Verfahren und eine Anlage zu schaffen, mit denen eine gleichmäßige Beaufschlagung der zu brennenden Formlinge, d.h. ein möglichst gleichmäßiges Strömungs- bzw. Geschwindigkeitsprofil der die Kernlöcher durchströmenden Rauchgase oder Kühlgase gewährleistet wird.

Eine weitere Aufgabe, die sich die Erfindung stellt, besteht darin, bei der Produktion von keramischen Formlingen, die brennbare Bestandteile enthalten, eine möglichst vollständige Ausnutzung ihres chemischen Wärmeinhaltes zu erzielen. Der Zusatz von brennbaren Bestandteilen zur Tonmasse ist heute aus Energieersparnisgründen vielfach erforderlich. Hauptsächlich kommen hierfür Kohlenstaub oder -grus, Sägespäne, Torf, Stroh, Rinde, Klärschlämme, Hausmüll in Frage. Solche Abfälle haben beachtliche Heizwerte von beispielsweise 8,374 bis 12,56 MJ/kg, die aber nicht ohne weiteres genützt werden können, weil ein überwiegender Teil der organischen Bestandteile in der Vorwärmzone vor Erreichen der Zündtemperatur trockendestilliert und die Destillationsgase und -dämpfe mit dem Rauchgas ungenützt durch den Kamin abziehen. Ein besonderes Ziel der Erfindung ist es daher, diese wärmetragenden Bestandteile für den Brennprozeß gänzlich nutzbar zu machen.

Die erstgenannte Aufgabe wird gemäß der Erfindung dadurch gelöst, daß während des Durchfahrens der Herdwagen durch die Zonen des Tunnelofens die Rauch- bzw. Kühlgase im Kreuzstrom von oben nach unten durch die Zwischenräume bzw. die Kernlöcher der Formlinge durch Saugen zwangsgeführt werden, wobei die Gase in einer Vielzahl von ersten Entspannungszonen entspannt, sodann unter Querschnittsverminderung der Gasführungen beschleunigt und darauf in einer für eine Vielzahl von Gasführungen gemeinsamen zweiten Entspannungszone nochmals entspannt werden, bevor sie abgeleitet werden.

Durch die erfindungsgemäße abwechselnde Beschleunigung und Entspannung der Rauch- bzw. Kühlgase und Wiederholung dieser Vorgänge ergibt sich die Wirkung, daß das Strömungsprofil der Gase beim Durchtritt durch die Kernlöcher vergleichmäßigt wird. Das Strömungsprofil kann in diesem Fall etwa als gerade Linie wiedergegeben werden.

Nach einer bevorzugten Ausführungsform zum Brennen von keramischen Formlingen, die wärmeerzeugende, brennbare Bestandteile enthalten, werden die Herdwagen durch eine Rauchgaszone bei einer Temperatur von etwa 80 bis 200$^\circ$C, eine Brennstoffentgasungszone bei einer Temperatur von etwa 200 bis 600$^\circ$C und eine Schnellaufheizzone bei etwa 600 bis 800$^\circ$C geführt, welche zusammen die Vorwärmzone bilden, und sodann durch die Brennzone und eine oder mehrere Kühlzonen geführt, wobei in jeder dieser Zonen die Gasführung gesondert regelbar ist.

Die Aufgabe der verbesserten Ausnutzung des Wärmeinhaltes von Zusatzstoffen wird nach der bevorzugten Ausführungsform der Erfindung dadurch gelöst, daß die Strömungsgeschwindigkeit der Rauchgase in der Vorwärmzone so geregelt wird, daß diese Gase mit trocken destillierenden Komponenten der brennbaren Bestandteile der keramischen Formlinge angereichert werden, worauf die so angereicherten Gase in der Brennzone nachverbrannt werden.

Zweckmäßig werden die Gase in der Schnellaufheizzone und in der Kühlzone im Kreislauf durch die Zwischenräume bzw. Kernlöcher der Formlinge und die Entspannungszonen umgewälzt.

Vorteilhaft werden gleiche Kernlochdurchmesser und gleiche Abmessungen enthaltende Formlinge auf den Herdwagen Mann an Mann mit möglichst geringem Spiel aneinandergereiht.

Eine weitere Ausführungsform der Erfindung besteht darin, daß die Formlinge mehrlagig übereinander gereiht werden, wobei ihre Zwischenräume bzw. Kernlöcher fluchten.

Die Anlage zur Durchführung des erfindungsgemäßen Verfahrens weist einen eine Vorwärmzone, eine Brennzone und eine Kühlzone einschließenden Ofenraum, eine Mehrzahl durch den Ofenraum fahrbarer Herdwagen, deren Abstellflächen für die Formlinge rostartig ausgebildet sind, und Gassammelkanäle in den Seitenwänden des Ofenraumes, die an Saugzugventilatoren angeschlossen sind, auf, welche Anlage dadurch gekennzeichnet ist, daß die Herdwagen einen gasdichten Boden aufweisen, auf welchem durch im Abstand angeordnete Stützen Stege tragende und zwischen den Stegen mit Saugstromdüsen versehene Abstellplatten abgestützt sind, wodurch erste Gasentspannungsräume zwischen jeweils der Unterseite der Formlinge und zweier benachbarter Stege der Abstellplatten sowie ein gemeinsamer zweiter

Entspannungsraum zwischen der Unterseite der Abstellplatten und dem gasdichten Boden des Herdwagens gebildet
werden.

Vorteilhaft beträgt die Gesamtdurchlaßfläche der Saugstromdüsen in den Abstellplatten 3 bis 8 % von der gesamten
Belagfläche des Herdwagens.

Zweckmäßig sind die Stege rippenförmig ausgebildet und
weisen eine konisch zulaufende Abstützkante für die Formlinge auf.

Nach einer bevorzugten Ausführungsform sind in den Seitenwänden der Herdwagen im Bereich des zweiten Gasentspannungsraumes Ableitkanäle vorgesehen, die vorteilhaft nach außen
konvergierend ausgebildet sind, wobei die Ableitkanäle
einer Mehrzahl von Herdwagen bei der Durchfahrt durch den
Tunnelofen in den Bereich jeweils eines Gassammelkanales
zu liegen kommen.

Eine weitere vorteilhafte Ausführungsform ist dadurch gekennzeichnet, daß die Ableitkanäle in den Seitenwänden
der Herdwagen durch hitzebeständige Schleifdichtungen, die
vorzugsweise lippen- oder zungenförmig ausgebildet sind
und in an der Ofenseitenwand ausgebildete Dicht- bzw.
Gegenflächen eingreifen, gegenüber dem Ofenraum bzw. zur
Unterseite der Herdwagen hin abgedichtet sind.

Die Erfindung wird anhand der Zeichnung im folgenden
näher erläutert.

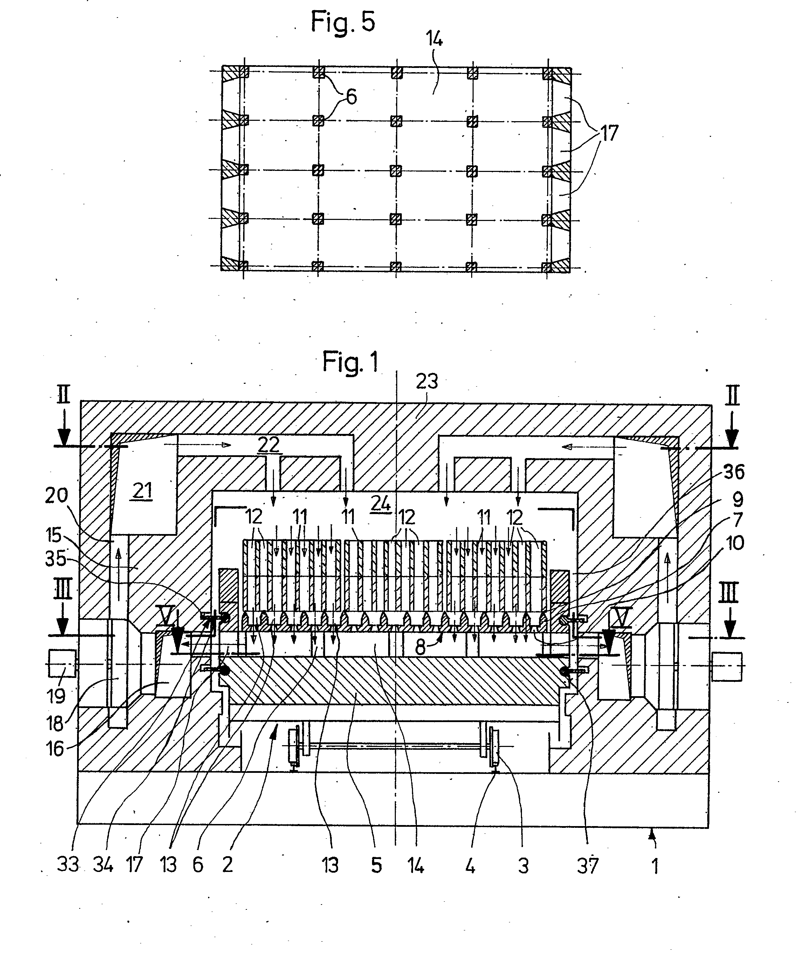

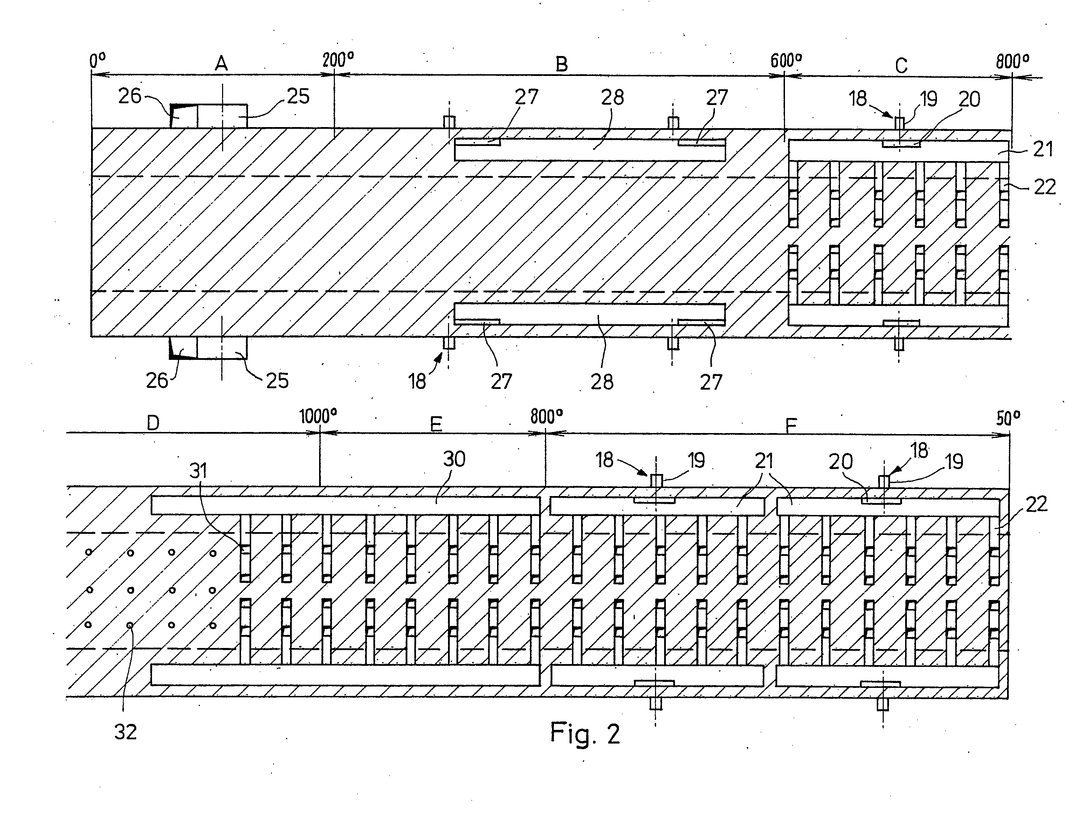

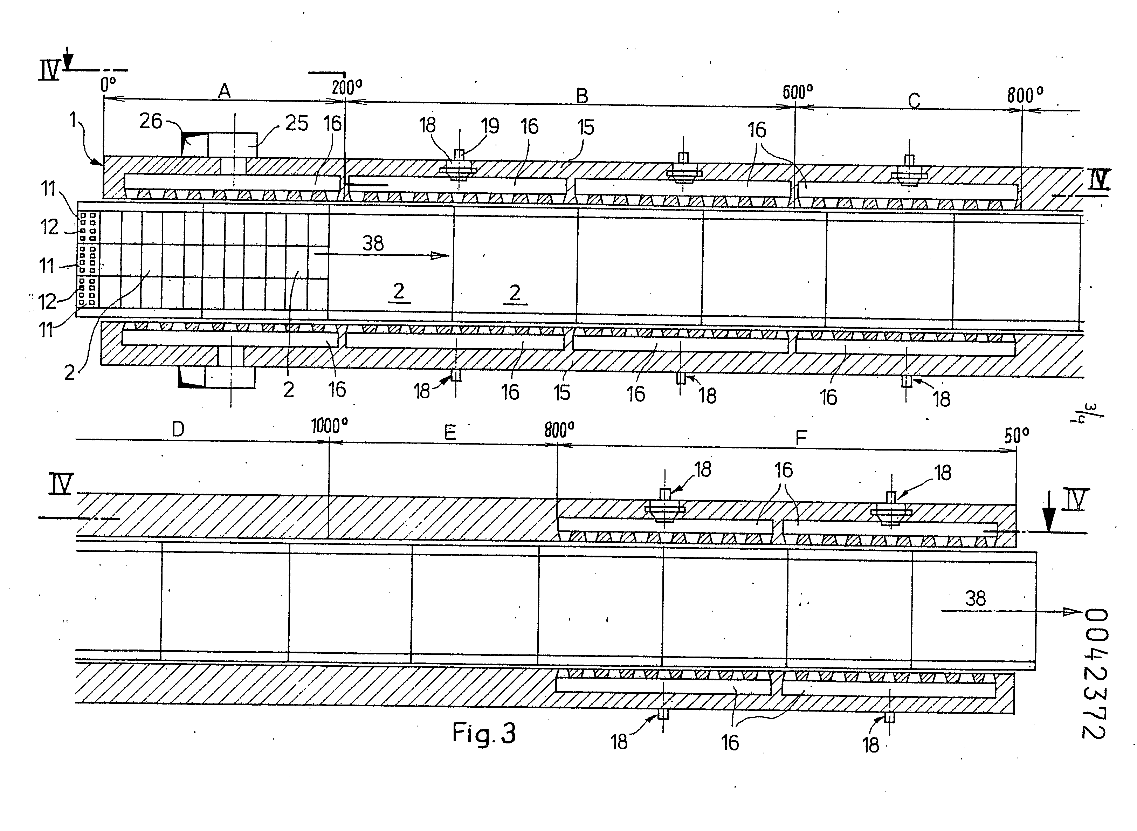

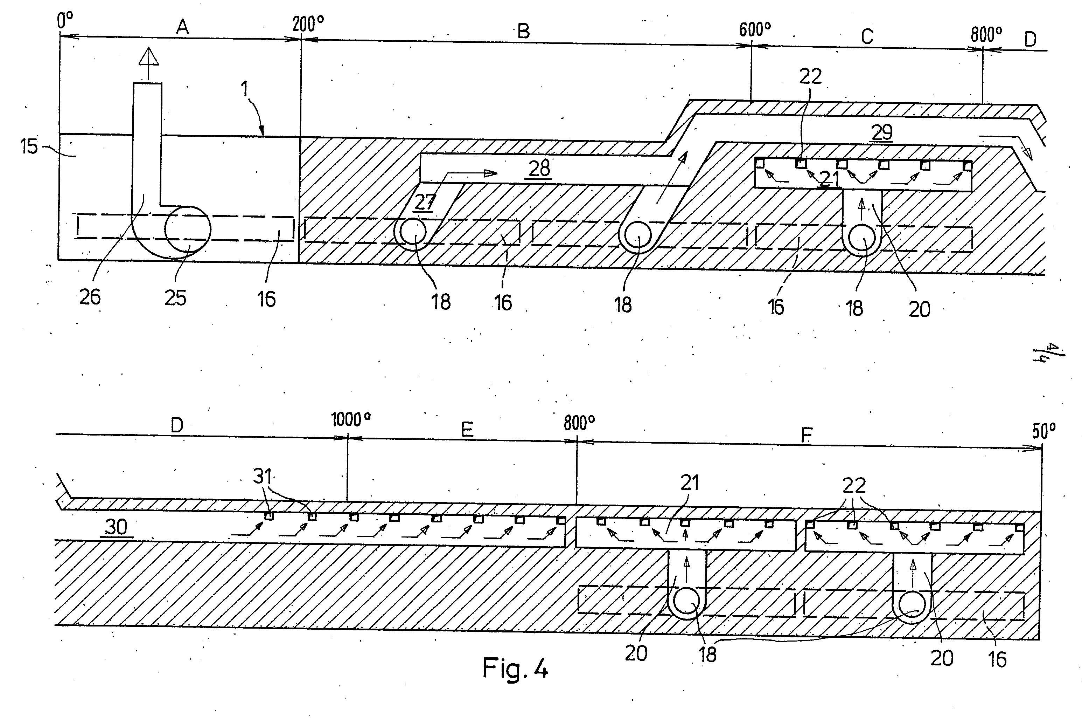

Fig. 1 zeigt einen Querschnitt durch einen Tunnelofen gemäß der Erfindung, u.zw. in der Schnellaufheizzone, mit
einem darin befindlichen Herdwagen. Fig. 2 veranschaulicht
einen Horizontalschnitt durch den Tunnelofen in Höhe der
Linie II-II der Fig. 1, Fig. 3 einen Schnitt nach der Linie III-III der Fig. 1. Fig. 4 stellt einen Schnitt nach der Linie IV-IV der Fig. 3 dar, Fig. 5 ist ein Schnitt gemäß der Linie V-V in Fig. 1 durch den Herdwagen.

In dem in den Figuren mit 1 bezeichneten Tunnelofen ist eine Anzahl von Herdwagen 2 mit einem Fahrwerk 3 auf Schienen 4 in einem geschlossenen Zug hintereinander geführt. Die Herdwagen 2 haben einen gasdichten Boden 5, auf welchem in Abständen voneinander Stützen 6 angeordnet sind. Auf diesen Stützen liegen Stege 7 tragende Abstellplatten 8 auf. Die Stege 7 besitzen konisch zulaufende Abstützkanten 9. Zwischen zwei benachbarten Stegen 7 sind jeweils Saugstromdüsen 10 vorgesehen. Auf den Abstützkanten 9 der Stege ruhen drei Reihen von zu brennenden Formlingen 11 in zwei Lagen übereinander auf. Die Formlinge weisen Kernlöcher 12 auf, wobei die Kernlöcher der Formlinge der oberen Lage mit den Kernlöchern der Formlinge der unteren Lage fluchten.

Wie aus der Darstellung gemäß Fig. 1 ersichtlich ist, sind zwischen dem Boden der unteren Formlingsreihe und jeweils zwei benachbarten Stegen 7 Räume 13 gebildet, die die Funktion von Entspannungsräumen haben, wie noch später ausgeführt werden wird. Zwischen der Unterseite der Abstellplatten 8, den Stützen 6 und dem gasdichten Boden 5 wird ein zusammenhängender Raum 14 gebildet, der die Funktion eines weiteren Entspannungsraumes hat. Die Stützen 6 in diesem Raum sind so verteilt, daß die Abstellplatten 8 jeweils mit ihren Ecken aufliegen (siehe auch Fig. 5).

In den symmetrisch zueinander ausgebildeten Seitenwänden 15 des Tunnelofens sind Gassammelkanäle, die Ansaugsammler 16 vorgesehen, die mit dem Raum 14 über Ableitkanäle 17 des Herdwagens in Verbindung stehen, u.zw. derart, daß jeweils eine Mehrzahl von Ableitkanälen von Herdwagen im Bereich eines Ansaugsammlers 16 zu liegen kommen. Vorteilhaft sind die Ableitkanäle 17 des Herdwagens nach außen konvergierend ausgebildet, wie aus Fig. 5 zu ersehen ist.

An den Ansaugsammler 16 ist ein Saugzugventilator 18 angeschlossen, der von einem Motor 19 angetrieben wird. Die abgesaugten Gase strömen durch die Leitung 20 in den Hauptgassammelkanal 21 und von dort durch Verteilerkanäle 22 der Decke 23 zurück in den Ofenraum 24.

Aus dem Horizontalschnitt des Tunnelofens gemäß Fig. 2 ist zu ersehen, daß die Anlage mehrere Zonen aufweist, u.zw. eine Rauchgaszone A, die auf einer Temperatur von etwa 0 bis 200°C gehalten wird, eine Brennstoffentgasungszone B, die auf einer Temperatur von etwa 200 bis 600°C gehalten wird und eine Schnellaufheizzone C, die bei etwa 600 bis 800°C gehalten wird; diese drei Zonen sind als Vorwärmzone anzusprechen. Anschließend folgt die Brennzone D, die auf einer Temperatur von 800 bis 1000°C gehalten wird; an die Brennzone D schließt die Nachverbrennungszone E an, die auf einer Temperatur von 1000 bis 800°C gehalten wird, und schließlich folgt eine Kühlzone, in der die Formlinge auf etwa 50°C abgekühlt werden.

Der Querschnitt der Fig. 1 entspricht der Ofenkonstruktion in der Schnellaufheizzone C und in der Kühlzone F. In diesem Anlagenteil ist das Umwälzsystem mit den Leitungen 20, 21, 22 und dem Saugzugventilator 18 vorgesehen, wodurch das die Kernlöcher 12 durchströmende Gas durch die ersten Entspannungsräume 13, die Saugstromdüsen 10, den Entspannungsraum 14, die Ableitkanäle 17 und das Leitungssystem 16, 20, 21, 22 und anschließend wieder durch die Kernlöcher 12 umgewälzt wird.

In den Seitenwänden 15 des Tunnelofens ist im Bereich der Zone A der Ansaugsammler 16 direkt an einen außenliegenden Ventilator 25 mit einem Rauchgaskamin 26 angeschlossen. In der Entgasungszone B ist der Saugsammler 16 an ein Leitungssystem angeschlossen, welches die Teile 27, 28 umfaßt. Dieses führt mit der an der Schnellaufheizzone C außen vorbeiführenden Überbrückungsleitung 29 zur Brennzone D und setzt sich in der Nachverbrennungszone E als Leitung 30 fort. Wie aus den Fig. 2 und 4 ersichtlich ist, zweigen von der Leitung 30 Verteilerkanäle 31 ab, die konstruktiv in analoger Weise ausgebildet sind wie die Verteilerkanäle 22 und in den Ofenraum 24 münden. In der Brennzone D sind, wie Fig. 2 zeigt, in der Decke 23 des Ofens 1 Schürlöcher 32 vorgesehen.

Aus Fig. 1 ist noch ein Detail der erfindungsgemäßen Anlage zu entnehmen, u.zw. die Anordnung von hitzebeständigen Schleifdichtungen 33 oberhalb und unterhalb des Ableitkanales 17. Diese Schleifdichtungen bestehen aus einem feuerfesten, zungenförmigen Teil 34, der an einer Gegenfläche 35 der Ofenseitenwand anliegt. Dadurch ist der Ableitkanal 17 gegenüber dem Spalt 36 zwischen Herdwagenseitenwänden 37 und Ofenseitenwänden 15 abgedichtet.

Das erfindungsgemäße Verfahren wird in folgender Weise durchgeführt:

Eine Reihe von Herdwagen, die ein- oder mehrlagig mit einer oder mehreren Reihen von Formlingen beschichtet sind, werden in Richtung der Pfeile 38 der Fig. 3 durch den Ofenraum 24 hindurchgeführt. Nach einer bevorzugten Ausführungsform der Erfindung werden Formlinge verwendet, die wärmeerzeugende brennbare Bestandteile, wie Kohlenstaub, enthalten. Die Formlinge weisen entweder Kernlöcher auf oder sie werden, beispielsweise dann, wenn Dachziegel gebrannt werden sollen, hochkant nebeneinander geschlichtet, sodaß Zwischenräume zwischen ihnen entstehen. Während der Durchfahrt durch die einzelnen Zonen werden Gase durch diese Kernlöcher bzw. Zwischenräume mit Hilfe der Saugzugventilatoren 18 bzw. 25 gesaugt.

Zu Beginn des Brennprozesses wird die Brennzone D durch die Schürlöcher 32 mittels Brennstoffzufuhr künstlich beheizt. Später ist eine zusätzliche Wärmezufuhr nicht oder nur zu Temperaturausgleichen erforderlich.

Die in der Brennzone gebildeten Rauchgase strömen durch den Ofenraum 24 in Gegenrichtung zu der Transportrichtung 38 der Herdwagen 2 und wärmen die Formlinge während des Durchströmens der Kernlöcher bzw. Zwischenräume in der gesamten Vorwärmzone vor, bevor sie durch den Kamin 26 ins Freie strömen. Die die Kernlöcher durchströmenden Gase werden zur Vergleichmäßigung ihres Geschwindigkeitsprofiles über die Belagfläche der Herdwagen abwechselnd entspannt und beschleunigt, wobei die erste Entspannung unmittelbar nach Durchströmen der Kernlöcher in den Entspannungsräumen 13 erfolgt. Beim Durchströmen der Saugstromdüsen 10 werden die Gase beschleunigt und schließlich in der zweiten, durch den Entspannungsraum 14 gebildeten Entspannungszone wieder entspannt. Es hat sich gezeigt, daß durch diese Zwangsführung der Gase ein äußerst gleichmäßiges Geschwindigkeitsprofil über die gesamte Belagsfläche erzielt wird. Diese gleichmäßige Durchströmung ist in den Zonen A, B, C und F der Anlage vorhanden und in jeder dieser Zonen ist die Gasströmung mittels der Ventilatoren 18, 25 für sich regelbar.

Von besonderer Bedeutung ist die Regelung in der Entgasungszone B, in der die Geschwindigkeit der Rauchgase so geregelt wird, daß die trockendestillierenden Komponenten der enthaltenen brennbaren Bestandteile mit den Rauchgasen abgezogen werden, mit anderen Worten, daß die Rauchgase an diesen wertvollen brennbaren Bestandteilen angereichert werden. Die aus der Entgasungszone durch

0042372

das Leitungssystem 28, 29, 30 umgeleiteten Gase werden zum Teil in der Brennzone D und zum Teil in der Nachverbrennungszone E dem Ofenraum zugeführt und strömen von hier wieder in Gegenrichtung zur Transportrichtung 38 der Herdwagen 2 durch die Brennzone D und die Vorwärmzone A, B und C.

Wie schon in Verbindung mit Fig. 1 dargelegt wurde, erfolgt in der Schnellaufheizzone C eine Umwälzung der heißen Brenngase in Querrichtung zur Ofenachse, sodaß eine rasche Aufheizung gewährleistet ist. In der Kühlzone F findet, wie aus Fig. 2 ersichtlich ist, in gleicher Weise eine Umwälzung der in der Kühlzone von außen in den Ofenraum 24 eingesaugten Kühlluft in Querrichtung zur Ofenachse statt. Somit erfolgt auch die Kühlung in rascher und in wirksamer Weise.

Der Hauptzug wird durch den Ventilator 25 ausgeübt, der größer dimensioniert ist als die Saugzugventilatoren 18. Die Saugrichtungen der Ventilatoren 18 und des Ventilators 25 kreuzen sich, wodurch im ganzen gesehen in den Zonen C und F eine schraubenlinienförmige Gasführung in Gegenrichtung zur Transportrichtung der Herdwagen bewirkt wird.

Patentansprüche:

1. Verfahren zum Brennen von dünnwandigen, insbesondere Kernlöcher (12) enthaltenden keramischen Formlingen (11), welche auf Herdwagen (2) gelagert durch eine Vorwärmzone (A, B, C), eine Brennzone (D, E) und eine Kühlzone (F) eines Tunnelofens (1) geführt werden, wobei in der Vorwärm- (A, B, C) und Brennzone (D, E) Rauchgase und in der Kühlzone (F) Kühlgase durch Zwischenräume zwischen den Formlingen bzw. durch die Kernlöcher (12) der Formlinge (11) geleitet und in einem Gassammelkanal (16) abgeleitet werden, dadurch gekennzeichnet, daß während des Durchfahrens der Herdwagen (2) durch die Zonen (A, B, C, F) des Tunnelofens (1) die Rauch- bzw. Kühlgase im Kreuzstrom von oben nach unten durch die Zwischenräume bzw. die Kernlöcher (12) der Formlinge (11) durch Saugen zwangsgeführt werden, wobei die Gase in einer Vielzahl von ersten Entspannungszonen (13) entspannt, sodann unter Querschnittsverminderung der Gasführungen (10) beschleunigt und darauf in einer für eine Vielzahl von Gasführungen gemeinsamen zweiten Entspannungszone (14) nochmals entspannt werden, bevor sie abgeleitet werden.

2. Verfahren nach Anspruch 1 zum Brennen von keramischen Formlingen (11), die wärmeerzeugende, brennbare Bestandteile enthalten, dadurch gekennzeichnet, daß die Herdwagen (2) durch eine Rauchgaszone (A) bei einer Temperatur von etwa 80 bis 200$^{o}$C, eine Brennstoffentgasungszone (B) bei einer Temperatur von etwa 200 bis 600$^{o}$C und eine Schnellaufheizzone (C) bei etwa 600 bis 800$^{o}$C geführt werden, welche zusammen die Vorwärmzone bilden, sodann durch die Brennzone (D, E) und eine oder mehrere Kühlzonen (F) geführt werden, wobei in jeder dieser Zonen die Gasführung gesondert regelbar ist.

3. Verfahren nach Anspruch 2, dadurch gekennzeichnet, daß die Strömungsgeschwindigkeit der Rauchgase in der Vorwärmzone (A, B, C) so geregelt wird, daß diese Gase mit
trockendestillierenden Komponenten der brennbaren Bestandteile der keramischen Formlinge (11) angereichert
werden, worauf die so angereicherten Gase in der Brennzone (D, E) nachverbrannt werden.

4. Verfahren nach Anspruch 1 oder 2, dadurch gekennzeichnet, daß die Gase in der Schnellaufheizzone (C) und in
der Kühlzone (F) im Kreislauf durch die Zwischenräume
bzw. Kernlöcher (12) der Formlinge (11) und die Entspannungszonen (13, 14) umgewälzt werden.

5. Verfahren nach den Ansprüchen 1 bis 4, dadurch gekennzeichnet, daß gleiche Kernlochdurchmesser und gleiche
Abmessungen enthaltende Formlinge (11) auf den Herdwagen (2) Mann an Mann mit möglichst geringem Spiel
aneinandergereiht werden.

6. Verfahren nach Anspruch 5, dadurch gekennzeichnet, daß
die Formlinge (11) mehrlagig übereinander gereiht werden, wobei ihre Zwischenräume bzw. Kernlöcher (12)
fluchten.

7. Anlage zur Durchführung des Verfahrens nach den Ansprüchen 1 bis 6, mit einem eine Vorwärmzone (A, B, C),
eine Brennzone (D, E) und eine Kühlzone (F) einschließenden Ofenraum (24), einer Mehrzahl durch den Ofenraum
fahrbarer Herdwagen (2), deren Abstellflächen für die
Formlinge (11) rostartig ausgebildet sind, und mit
Gassammelkanälen (16) in den Seitenwänden (15) des Ofenraumes, die an Saugzugventilatoren (18, 25) angeschlossen sind, dadurch gekennzeichnet, daß die Herdwagen (2) einen gasdichten Boden (5) aufweisen, auf
welchem durch im Abstand angeordnete Stützen (6) Stege
(7) tragende und zwischen den Stegen mit Saugstromdüsen (10) versehene Abstellplatten (8) abgestützt sind, wodurch erste Gasentspannungsräume (13) zwischen jeweils der Unterseite der Formlinge (11) und zweier benachbarter Stege (7) der Abstellplatten (8) sowie ein gemeinsamer zweiter Entspannungsraum (14) zwischen der Unterseite der Abstellplatten (8) und dem gasdichten Boden (5) des Herdwagens (2) gebildet werden.

8. Anlage nach Anspruch 7, dadurch gekennzeichnet, daß die Gesamtdurchlaßfläche der Saugstromdüsen (10) in den Abstellplatten (8) 3 bis 8 % von der gesamten Belagfläche des Herdwagens (2) beträgt.

9. Anlage nach Anspruch 7, dadurch gekennzeichnet, daß die Stege (7) rippenförmig ausgebildet sind und eine konisch zulaufende Abstützkante (9) für die Formlinge (11) aufweisen.

10. Anlage nach den Ansprüchen 7 bis 9, dadurch gekennzeichnet, daß in den Seitenwänden (37) der Herdwagen (2) im Bereich des zweiten Gasentspannungsraumes (14) Ableitkanäle (17) vorgesehen sind, die vorteilhaft nach außen konvergierend ausgebildet sind, wobei die Ableitkanäle einer Mehrzahl von Herdwagen bei der Durchfahrt durch den Tunnelofen in den Bereich jeweils eines Gassammelkanales (16) zu liegen kommen.

11. Anlage nach den Ansprüchen 7 bis 10, dadurch gekennzeichnet, daß die Ableitkanäle (17) in den Seitenwänden (37) der Herdwagen (2) durch hitzebeständige Schleifdichtungen (33), die vorzugsweise lippen- oder zungenförmig ausgebildet sind und in an der Ofenseitenwand ausgebildete Dicht- bzw. Gegenflächen (35) eingreifen, gegenüber dem Ofenraum (24) bzw. zur Unterseite der Herdwagen (2) hin abgedichtet sind.

Fig. 5

Fig. 1

0042372

$^1/_4$

Fig. 2

0042372

Fig. 3

0042372

4/4

Fig. 4

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | DE - A1 - 2 721 948 (R. RIEDEL)<br>* Anspruch 1 * <br>-- | 1,4,<br>7,11 | F 27 B 9/10<br>C 04 B 33/32 |
| | DE - B2 - 2 643 406 (A. HÄSSLER<br>* Spalte 4, Zeilen 1 bis 17 *<br>-- | 2 | |
| A | DE - C - 552 523 (J. WILLIAMSON)<br>* Fig. 3 *<br>-- | 1 | |
| A | US - A - 4 069 010 (G.C. FAY)<br>* Anspruch 1 *<br>-- | 1 | RECHERCHIERTE SACHGEBIETE (Int. Cl.³) |
| A | DE - A1 - 2 627 831 (KELLER OFENBAU)<br>* Fig. 1 *<br>-- | 1,11 | C 04 B 33/32<br>C 04 B 35/64<br>F 27 B 9/00<br>F 27 D 3/12 |
| D | AT - B - 174 012 (KREBS INTERNATIONAL ENGINEERING)<br>---- | | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 07-08-1981 | HÖRNER |

EPA form 1503.1 06.78